# EUROPÄISCHE PATENTSCHRIFT

(11) **EP 2 766 208 B1**
(45) Veröffentlichungstag und Bekanntmachung des Hinweises auf die Patenterteilung: **01.05.2019**
(21) Anmeldenummer: 12783501.5
(22) Anmeldetag: 09.10.2012
(51) Int. Cl.: B60K 37/06

(54) **VERFAHREN ZUM ANZEIGEN VON INFORMATIONEN INSBESONDERE IN EINEM FAHRZEUG UND ANZEIGEEINRICHTUNG FÜR EIN FAHRZEUG**
METHOD FOR DISPLAYING INFORMATION IN PARTICULAR IN A VEHICLE AND DISPLAY UNIT FOR A VEHICLE
PROCÉDÉ D'AFFICHAGE D'INFORMATIONS EN PARTICULIER DANS UN VÉHICULE ET SYSTÈME D'AFFICHAGE POUR UN VÉHICULE

(30) Priorität: 15.10.2011 DE 102011116141
(43) Veröffentlichungstag der Anmeldung: 20.08.2014
(73) Patentinhaber: Volkswagen Aktiengesellschaft, 38440 Wolfsburg (DE)
(72) Erfinder: JUN, Mi-Ran, 12059 Berlin (DE); KUHN, Mathias, 14129 Berlin (DE); PEDERSEN, Sönke, 12205 Berlin (DE); HAHN, Alexander, 38104 Braunschweig (DE); LOU, Jian, 10707 Berlin (DE)
(86) Internationale Anmeldenummer: PCT/EP2012/004229
(87) Internationale Veröffentlichungsnummer: WO 2013/053463

(56) Entgegenhaltungen:
- DE-A1-102008 048 825
- DE-A1-102010 012 240

## Beschreibung

Die vorliegende Erfindung betrifft ein Verfahren zum Anzeigen von Informationen in einem Fahrzeug. Bei dem Verfahren sind von einer Steuervorrichtung Graphikdaten erzeugbar, die eine Anzeigefläche so ansteuern, dass in einem ersten Anzeigemodus graphische Objekte und/oder Schaltflächen zur Visualisierung von Informationen einer ersten Fahrzeugeinrichtung angezeigt werden und in einem zweiten Anzeigemodus graphische Objekte und/oder Schaltflächen zur Visualisierung von Informationen mehrerer Fahrzeugeinrichtungen angezeigt werden. Die erfindungsgemäße Anzeigeeinrichtung weist eine Steuervorrichtung auf, mittels derer Graphikdaten zum Anzeigen graphischer Objekte auf einer Anzeigefläche zur Visualisierung von Informationen einer ersten Fahrzeugeinrichtung in einem ersten Anzeigemodus und graphische Objekte und/oder Schaltflächen zur Visualisierung von Informationen mehrerer Fahrzeugeinrichtungen in einem zweiten Anzeigemodus erzeugbar sind.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, sodass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Die DE 10 2010 012240 A1 offenbart den Oberbegriff des Anspruchs 1.

Der vorliegenden Erfindung liegt die Aufgabe zugrunde, ein Verfahren und eine Anzeigeeinrichtung der eingangs genannten Art bereitzustellen, bei welchen Informationen von Fahrzeugeinrichtungen so darstellbar sind, dass sie vom Betrachter schnell und intuitiv erfasst werden können.

Erfindungsgemäß wird diese Aufgabe durch ein Verfahren mit den Merkmalen des Anspruchs 1 und eine Anzeigeeinrichtung mit den Merkmalen des Anspruchs 8 gelöst. Vorteilhafte Ausgestaltungen und Weiterbildungen ergeben sich aus den abhängigen Ansprüchen.

In dem zweiten Anzeigemodus wird insbesondere eine Ausgangsanzeige, ein sogenannter Homescreen, oder eine Anzeige in einem Ruhezustand wiedergegeben. Das erfindungsgemäße Verfahren betrifft somit insbesondere den Übergang der Anzeige einer Anwendung einer Fahrzeugeinrichtung zurück zu einer Ausgangsanzeige. Dieser Übergang wird vorteilhafterweise so ausgeführt, dass sich der Nutzer in der Darstellung im zweiten Anzeigemodus sehr einfach und intuitiv orientieren kann. Es werden weiterhin Informationen des vorherigen ersten Anzeigemodus dargestellt. Ferner werden graphische Objekte oder Schaltflächen zu anderen Anwendungen angezeigt, die vom Rand der Anzeigefläche in dieselbe hineinbewegt werden. Hierdurch ist es dem Betrachter, d.h. insbesondere dem Fahrer des Fahrzeugs, möglich, die Informationen zu den anderen Fahrzeugeinrichtungen besonders einfach und schnell zu erfassen, da beim Übergang in den Ausgangszustand des zweiten Anzeigemodus immer dieselbe Animation durchgeführt wird. Somit trägt das erfindungsgemäße Verfahren auch zur Sicherheit beim Führen des Fahrzeugs bei. Der Fahrer des Fahrzeugs wird durch das Erfassen der angezeigten Informationen nicht vom Fahrgeschehen abgelenkt.

Gemäß einer Weiterbildung des erfindungsgemäßen Verfahrens wird bei dem Übergang von dem ersten Anzeigemodus in den zweiten Anzeigemodus die Darstellung der graphischen Objekte und/oder Schaltflächen zur Visualisierung von Informationen der ersten Fahrzeugeinrichtung so verändert, dass im zweiten Anzeigemodus keine Schaltflächen mehr angezeigt werden. Alternativ kann diese Darstellung so verändert werden, dass zumindest eine Teilmenge der im ersten Anzeigemodus angezeigten Schaltflächen im zweiten Anzeigemodus als Anzeigeflächen angezeigt werden.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Die Schaltflächen können beliebig für eine frei programmierbaren Anzeigefläche erzeugt und von dieser angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Erst bei einer Auswahl der Schaltfläche wird die ihr zugeordnete Funktion ausgeführt.

In diesem Fall wird beim Übergang zwischen den beiden Anzeigemodi auch die technische Funktion eines graphischen Objekts von einer Schaltfläche, welche ein Bedienelement darstellt, zu einer Anzeigefläche verändert. Auch diese Ausgestaltung erleichtert es dem Betrachter, sich bei der Informationsdarstellung im zweiten Anzeigemodus zu orientieren, da im zweiten Anzeigemodus zwar keine als Schaltflächen ausgestaltete Bedienelemente mehr angezeigt werden, die graphischen Objekte zumindest zum Teil jedoch weiterhin als Anzeigeflächen vorhanden sind.

Gemäß einer weiteren Ausgestaltung des erfindungsgemäßen Verfahrens wird bei dem Übergang von dem ersten Anzeigemodus in den zweiten Anzeigemodus die Darstellung der graphischen Objekte und/oder Schaltflächen zur Visualisierung von Informationen der ersten Fahrzeugeinrichtung so verkleinert, dass das Seitenverhältnis gleich bleibt und/oder dass die relative Positionierung der im zweiten Anzeigemodus angezeigten graphischen Objekte und/oder Schaltflächen, die auch im ersten Anzeigemodus angezeigt wurden, gleich bleibt. Auch durch diese Ausgestaltung kann der Betrachter intuitiver und einfacher die dargestellten Informationen erfassen, welche sich beim Übergang vom ersten in den zweiten Anzeigemodus verändern.

Gemäß einer Ausgestaltung des erfindungsgemäßen Verfahrens wird im zweiten Anzeigemodus insbesondere jeweils ein einziges graphisches Objekt für jeweils eine weitere Fahrzeugeinrichtung angezeigt. Bei diesem graphischen Objekt kann es sich beispielsweise um ein sogenanntes Widget handeln. Dieses Widget zeigt Informationen zu einer Anwendung der weiteren Fahrzeugeinrichtungen an. Die Fahrzeugeinrichtungen können beliebige Sensoren umfassen, welche Betriebsparameter des Fahrzeugs erfassen, welche auf der Anzeigefläche angezeigt werden können. Ferner umfassen die Fahrzeugeinrichtungen ein Navigationssystem des Fahrzeugs und das Infotainmentsystem. Diese Systeme umfassen Anwendungen, deren Informationen im zweiten Anzeigemodus von den Widgets angezeigt werden.

Gemäß einer weiteren Ausgestaltung des erfindungsgemäßen Verfahren wird bei dem Übergang von dem ersten Anzeigemodus in den zweiten Anzeigemodus das graphische Objekt und/oder die Schaltfläche für eine weitere Fahrzeugeinrichtung jeweils radial vom Rand der Anzeigefläche in Richtung einer definierten Position der Anzeigefläche bewegt. Das graphische Objekt bzw. die Schaltfläche wird dabei nicht bis zu dieser Position bewegt, sondern nur in Richtung dieser Position. Bei der definierten Position handelt es sich insbesondere um den Mittelpunkt der Anzeigefläche. Vorteilhafterweise wird durch diese Ausgestaltung die Informationserfassung für den Betrachter erleichtert, da die graphischen Objekte bzw. Schaltflächen der weiteren Fahrzeugeinrichtung sich im selben Muster, sternförmig zu einem bestimmten Fluchtpunkt hin bewegen.

Gemäß einer weiteren Ausgestaltung des erfindungsgemäßen Verfahrens werden bei dem Übergang von dem ersten Anzeigemodus in den zweiten Anzeigemodus die graphischen Objekte und/oder Schaltflächen zur Visualisierung von Informationen anderer Fahrzeugeinrichtungen eingeblendet. Hierdurch können die Informationen, die neu erscheinen, leichter erfasst werden.

Die erfindungsgemäße Anzeigeeinrichtung ist dadurch gekennzeichnet, dass mittels der Steuervorrichtung bei einem Übergang von dem ersten Anzeigemodus in den zweiten Anzeigemodus Graphikdaten erzeugbar sind, bei welchen die Darstellung der graphischen Objekte und/oder Schaltflächen zur Visualisierung von Informationen der ersten Fahrzeugeinrichtung verkleinert und verändert wird und währenddessen am Rand der Anzeigefläche graphische Objekte und/oder Schaltflächen zur Visualisierung von Informationen anderer Fahrzeugeinrichtungen neu angezeigt werden und diese graphischen Objekte und/oder Schaltflächen zur Visualisierung von Informationen anderer Fahrzeugeinrichtungen vom Rand der Anzeigefläche in Richtung der Mitte der Anzeigefläche bewegt werden.

Die erfindungsgemäße Anzeigeeinrichtung ist insbesondere so ausgebildet, dass sie die vorstehend genannten Verfahrensschritte teilweise oder vollständig ausführen kann. Sie weist somit auch dieselben vorstehend genannten Vorteile wie das erfindungsgemäße Verfahren auf.

Des Weiteren betrifft die Erfindung ein Fahrzeug mit einer solchen Anzeigeeinrichtung.

Die Erfindung wird nun anhand eines Ausführungsbeispiels mit Bezug zu den Zeichnungen erläutert.
- Figur 1: zeigt ein Fahrzeug mit dem Ausführungsbeispiel der erfindungsgemäßen Anzeigeeinrichtung,
- Figur 2: zeigt schematisch ein Ausführungsbeispiel der erfindungsgemäßen Anzeigeeinrichtung und die Verbindung dieser Anzeigeeinrichtung mit anderen Einrichtungen des Fahrzeugs,
- Figur 3: zeigt eine Schnittansicht der Anzeigevorrichtung des Ausführungsbeispiels der erfindungsgemäßen Anzeigeeinrichtung und
- die Figuren 4 und 5: zeigen mittels eines Ausführungsbeispiels des erfindungsgemäßen Verfahrens auf der Anzeigefläche wiedergegebenen Anzeigen.

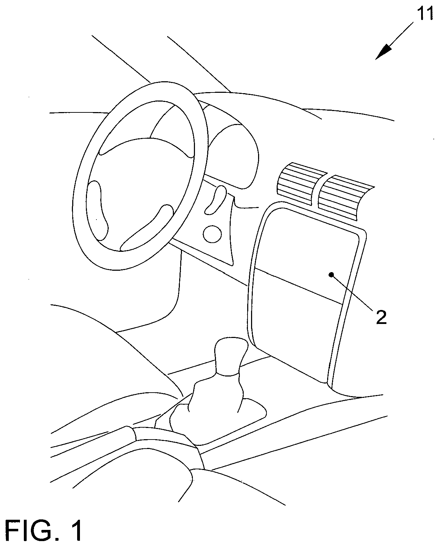

Mit Bezug zu den Figuren 1 bis 3 wird zunächst ein Ausführungsbeispiel der erfindungsgemäßen Anzeigeeinrichtung 6 und dessen Anordnung in einem Kraftfahrzeug 11 erläutert:
Die Anzeigeeinrichtung 6 umfasst eine Anzeigevorrichtung 1 mit einer Anzeigefläche 2, die so im Innenraum des Kraftfahrzeugs 11 angeordnet ist, dass sie für zumindest einen Fahrzeuginsassen, insbesondere den Fahrer, gut sichtbar ist. Die Anzeigefläche 2 kann von einem Display, insbesondere einem Flüssigkeitskristalldisplay, beliebiger Bauart bereitgestellt werden.

Die Anzeigeeinrichtung 6 umfasst ferner eine Steuervorrichtung 3, die mit der Anzeigevorrichtung 1 verbunden ist, mit welcher Graphikdaten zur Informationsdarstellung auf der Anzeigefläche 2 erzeugbar sind. Des Weiteren ist die Anzeigeeinrichtung 6 mit einer Eingabevorrichtung gekoppelt, die als berührungsempfindliche Oberfläche 4 auf der Anzeigefläche 2 ausgebildet ist. Es wird somit ein sogenannter Touchscreen bereitgestellt.

Beispielsweise kann eine Folie über der Anzeigefläche 2 angeordnet sein, mit welcher die Position einer Berührung eines Betätigungsobjekts 12 detektiert werden kann. Bei dem Betätigungsobjekt handelt es sich insbesondere um die Fingerspitze 12 eines Nutzers. Die Folie kann z. B. als resistive Touchfolie, kapazitive Touchfolie oder piezoelektrische Folie ausgebildet sein. Ferner kann die Folie so ausgebildet sein, dass ein Wärmestrom, der z.B. von der Fingerspitze 12 eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 2 angezeigten graphischen Objekt zugeordnet werden. Des Weiteren kann die Länge der Berührung bei einer bestimmten Position oder innerhalb eines bestimmten Bereichs erfasst werden. Auf der Anzeigefläche 2 kann eine betätigbare Schaltfläche angezeigt werden.

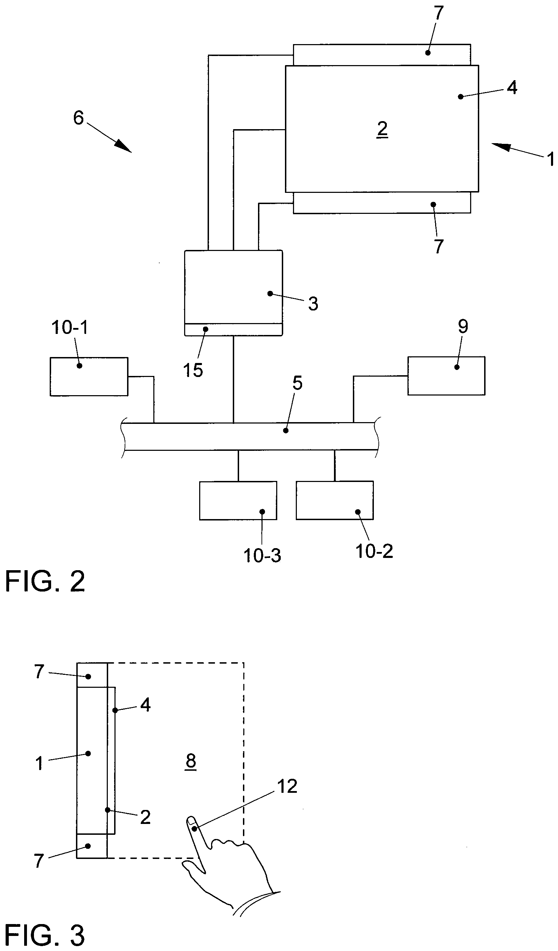

Des Weiteren ist die Anzeigeeinrichtung 6 mit einer Annäherungserfassungseinrichtung 7 gekoppelt. Mittels der Annäherungserfassungseinrichtung 7 kann ein Betätigungsobjekt 12, z. B. die Fingerspitze eines Nutzers, in einem Detektionsbereich 8 erfasst werden. Der Detektionsbereich 8 ist in Fig. 3 im Detail dargestellt. Der Detektionsbereich 8 ist so gebildet, dass eine Annäherung eines Betätigungsobjekts 12 an die berührungsempfindliche Oberfläche 4 auf der Anzeigefläche 2 erfasst wird.

In dem hier beschriebenen Ausführungsbeispiel bildet der Detektionsbereich 8 zumindest ein Volumen vor der Bedienoberfläche 4. Es ist insbesondere ein Quader gebildet, der mit seinen Seitenflächen in der Erstreckung, die parallel zu der berührungsempfindlichen Oberfläche 4 verläuft, die berührungsempfindliche Oberfläche 4 vollständig umschließt. In einer Richtung senkrecht zur berührungsempfindlichen Oberfläche 4 reicht der Quader von der berührungsempfindlichen Oberfläche 4 oder unmittelbar vor der berührungsempfindlichen Oberfläche 4 bis zu einem Abstand von z. B. etwa 40 cm. Der Abstand der äußeren Grenze des Detektionsbereichs 8 vor der berührungsempfindlichen Oberfläche 4 wird dabei so gewählt, dass eine Annäherung an die berührungsempfindliche Oberfläche 4 so rechtzeitig detektiert werden kann, dass die Anzeige auf der Anzeigefläche 2 früh genug verändert werden kann, um den Nutzer bei einer Eingabe zu unterstützen. Ferner sollte der Abstand des Detektionsbereichs 8 von der berührungsempfindlichen Oberfläche 4 so gewählt werden, dass das Betätigungsobjekt 12 oder ein anderes Objekt so selten wie möglich in den Detektionsbereich 8 bewegt wird, wenn keine Bedienung der berührungsempfindlichen Oberfläche 4 beabsichtigt ist.

Weitere Details zu verschiedenen Ausbildungen der Annäherungserfassungseinrichtung 7 sind beispielsweise in der WO 2011/051361 A1 beschrieben.

Die Annäherungserfassungseinrichtung 7 überträgt die aktuelle Position eines Betätigungsobjekts 12 im Detektionsbereich 8 fortwährend an die Steuervorrichtung 3. In Abhängigkeit von diesem Signal kann die Steuervorrichtung 3 die Anzeige auf der Anzeigefläche 2 verändern.

Schließlich ist die Steuervorrichtung 3 über eine Schnittstelle 15 mit einem Datenbus 5 gekoppelt. Über diesen Datenbus 5 ist die Steuervorrichtung 3 mit weiteren Einrichtungen 9, 10-1, 10-2, 10-3 des Kraftfahrzeugs 11 verbunden, zu denen Informationen auf der Anzeigefläche 2 angezeigt werden sollen. Mittels Anzeigeeinrichtung 6 und durch das Verfahren können den Fahrzeuginsassen Informationen angezeigt werden.

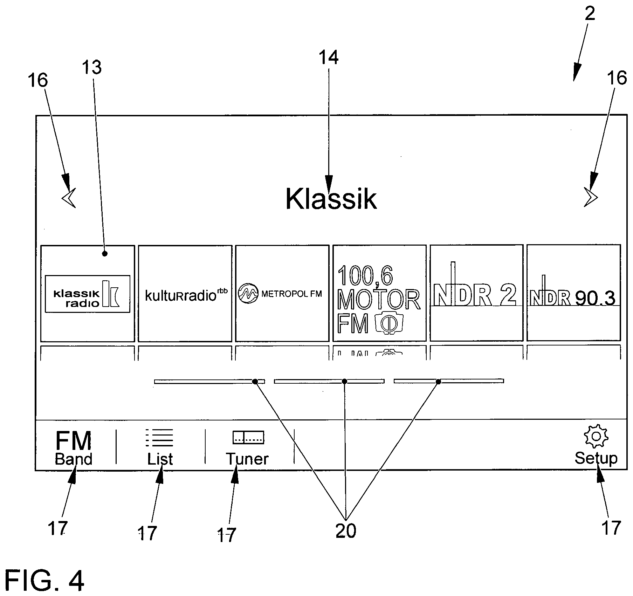

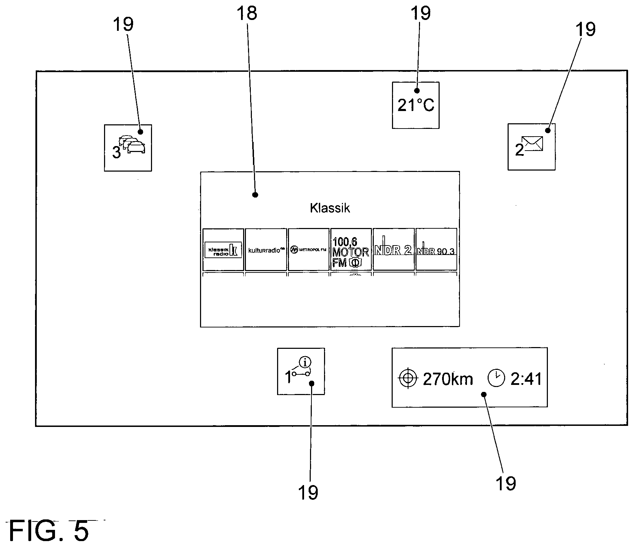

Im Folgenden wird ein Ausführungsbeispiel des erfindungsgemäßen Verfahrens, welches von der vorstehend beschriebenen Anzeigeeinrichtung 6 ausführbar ist, mit Bezug zu den Figuren 4 und 5 im Detail erläutert:
Der Nutzer kann durch einen Bedienvorgang auf an sich bekannte Weise mittels der berührungsempfindlichen Oberfläche 4 in einer hierarchischen Menüstruktur, welche auf der Anzeigefläche 2 angezeigt wird, einen ersten Anzeigemodus zur Anzeige bringen, bei welchem graphische Objekte und Schaltflächen einer bestimmten Fahrzeugeinrichtung 9 angezeigt werden. In Figur 4 ist beispielsweise die Anzeige auf der Anzeigefläche 2 wiedergegeben, die zu einem Radio 9 des Fahrzeugs 11 gehört. Es werden graphische Objekte 13 und 14 angezeigt, welche verschiedene Radiosender bezeichnen, und die Gruppe, zu welcher diese Radiosender gehören. Ferner werden verschiedene Schaltflächen 16, 17, 20 angezeigt, die Bedienelemente zur Steuerung des Radios darstellen.

Der Nutzer kann nun durch Betätigen eines separaten Bedienelements, durch eine Schaltfläche oder auf andere Weise den Anzeigemodus wechseln. Dieser Wechsel kann auch automatisch und selbständig von der Steuervorrichtung 3 herbeigeführt werden, wenn beispielsweise die Anzeigevorrichtung 1 in einen Ruhezustand übergeht.

Bei dem Übergang von dem ersten Anzeigemodus in den zweiten Anzeigemodus wird die gesamte Anzeige, welche im ersten Anzeigemodus wiedergegeben wird, welche in Figur 4 gezeigt ist, verkleinert, wobei das Seitenverhältnis der Anzeige erhalten bleibt. Gleichzeitig verschwinden bestimmte Schaltflächen 16, 17. Ein Teil der Schaltflächen 20 wird jedoch in Anzeigeflächen umgewandelt, d.h. die Anzeige verändert sich hinsichtlich dieser Schaltflächen 20 nicht, sie sind jedoch nicht mehr betätigbar, stellen somit keine Bedienelemente mehr dar. Während der Verkleinerung und Veränderung der Anzeige des ersten Anzeigemodus werden am Rand der Anzeigefläche 2 graphische Objekte zu anderen Fahrzeugeinrichtungen 10-1, 10-2, 10-3 eingeblendet und anschließend vom Rand der Anzeigefläche 2 in Richtung der Mitte der Anzeigefläche 2 bewegt. Die graphischen Objekte 19 werden dabei bei den Positionen des Randes der Anzeigefläche 2 eingeblendet und so in Richtung der Mitte der Anzeigefläche 2 bewegt, dass alle graphischen Objekte 18, 19 des zweiten Anzeigemodus übersichtlich und gut ablesbar auf der Anzeigefläche 2 angezeigt werden.

In Figur 5 ist der Endzustand des Übergangs von dem ersten Anzeigemodus in den zweiten Anzeigemodus dargestellt, d.h. die Anzeige auf der Anzeigefläche 2 im zweiten Anzeigemodus, welcher einen Ruhezustand oder Ausgangszustand darstellt. Das graphische Objekt 18 entspricht dabei der vorhergehenden Anzeige zu dem Radio 9 im ersten Anzeigemodus, jedoch in der verkleinerten und veränderten Form. Die weiteren graphischen Objekte 19 sind Widgets anderer Fahrzeugeinrichtungen 10-1, 10-2, 10-3. Es wird beispielsweise der Kilometerstand und die vergangene Zeit seit Fahrtbeginn dargestellt. Ferner wird die aktuelle Innen- oder Außentemperatur angezeigt. Des Weiteren wird angezeigt, ob neue E-Mails über eine Funkschnittstelle eingegangen sind. Schließlich können Informationen zu Fahrerassistenzsystemen und zu den Betriebsparametern des Fahrzeugs 11 angezeigt werden.

## Patentansprüche

1. Verfahren zum Anzeigen von Informationen insbesondere in einem Fahrzeug (11), bei dem von einer Steuervorrichtung (3) Grafikdaten erzeugbar sind, die eine Anzeigefläche (2) so ansteuern, dass in einem ersten Anzeigemodus grafische Objekte (13, 14) und/oder Schaltflächen (16, 17, 20) zur Visualisierung von Informationen einer ersten Fahrzeugeinrichtung (9) angezeigt werden und in einem zweiten Anzeigemodus grafische Objekte (18, 19) und/oder Schaltflächen zur Visualisierung von Informationen mehrerer Fahrzeugeinrichtungen (9, 10-1, 10-2, 10-3) angezeigt werden,
**dadurch gekennzeichnet, dass**
bei einem Übergang von dem ersten Anzeigemodus, welcher eine Anzeige zur Anwendung der Fahrzeugeinrichtung bereitstellt, in den zweiten Anzeigemodus, welcher eine Ausgangsanzeige bereitstellt, die Darstellung der grafischen Objekte (13, 14) und/oder Schaltflächen (16, 17, 20) zur Visualisierung von Informationen der ersten Fahrzeugeinrichtung (9) verkleinert und verändert wird und währenddessen am Rand der Anzeigefläche (2) grafische Objekte (19) und/oder Schaltflächen zur Visualisierung von Informationen anderer Fahrzeugeinrichtungen (10-1, 10-2, 10-3) neu angezeigt werden und diese grafischen Objekte (19) und/oder Schaltflächen zur Visualisierung von Informationen anderer Fahrzeugeinrichtungen (10-1, 10-2, 10-3) vom Rand der Anzeigefläche (2) in Richtung der Mitte der Anzeigefläche (2) bewegt werden.

2. Verfahren nach Anspruch 1,
**dadurch gekennzeichnet, dass**
bei dem Übergang von dem ersten Anzeigemodus in den zweiten Anzeigemodus die Darstellung der grafischen Objekte (13, 14) und/oder Schaltflächen (16, 17, 20) zur Visualisierung von Informationen der ersten Fahrzeugeinrichtung (9) so verändert wird, dass im zweiten Anzeigemodus keine Schaltflächen mehr angezeigt werden.

3. Verfahren nach Anspruch 1 oder 2,
**dadurch gekennzeichnet, dass**
bei dem Übergang von dem ersten Anzeigemodus in den zweiten Anzeigemodus die Darstellung der grafischen Objekte (13, 14) und/oder Schaltflächen (16, 17, 20) zur Visualisierung von Informationen der ersten Fahrzeugeinrichtung (9) so verändert wird, dass zumindest eine Teilmenge der im ersten Anzeigemodus angezeigten Schaltflächen (20) im zweiten Anzeigemodus als Anzeigeflächen angezeigt werden.

4. Verfahren nach einem der vorhergehenden Ansprüche,
**dadurch gekennzeichnet, dass**
bei dem Übergang von dem ersten Anzeigemodus in den zweiten Anzeigemodus die Darstellung der grafischen Objekte (13, 14) und/oder Schaltflächen (16, 17, 20) zur Visualisierung von Informationen der ersten Fahrzeugeinrichtung (9) so verkleinert wird, dass das Seitenverhältnis gleich bleibt und/oder dass die relative Positionierung der im zweiten Anzeigemodus angezeigten grafischen Objekte und/oder Schaltflächen, die auch im ersten Anzeigemodus angezeigt wurden, gleich bleibt.

5. Verfahren nach einem der vorhergehenden Ansprüche,
**dadurch gekennzeichnet, dass**
im zweiten Anzeigemodus jeweils ein einziges graphisches Objekt (19) für jeweils eine weitere Fahrzeugeinrichtung (10-1, 10-2, 10-3) angezeigt wird.

6. Verfahren nach einem der vorhergehenden Ansprüche,
**dadurch gekennzeichnet, dass**
bei dem Übergang von dem ersten Anzeigemodus in den zweiten Anzeigemodus das graphische Objekt (19) und/oder die Schaltfläche für eine weitere Fahrzeugeinrichtung (10-1, 10-2, 10-3) jeweils radial vom Rand der Anzeigefläche (2) in Richtung einer definierten Position, insbesondere dem Mittelpunkt, der Anzeigefläche (2) bewegt wird.

7. Verfahren nach einem der vorhergehenden Ansprüche,
**dadurch gekennzeichnet, dass**
bei dem Übergang von dem ersten Anzeigemodus in den zweiten Anzeigemodus die grafischen Objekte (19) und/oder Schaltflächen zur Visualisierung der Informationen anderer Fahrzeugeinrichtungen (10-1, 10-2, 10-3) eingeblendet werden.

8. Anzeigeeinrichtung (6) für ein Fahrzeug (11) mit
einer Steuervorrichtung (3), mittels derer Grafikdaten zum Anzeigen graphischer Objekte (13, 14) und/oder Schaltflächen (16, 17, 20) auf einer Anzeigefläche (2) zur Visualisierung von Informationen einer ersten Fahrzeugeinrichtung (9) in einem ersten Anzeigemodus und grafische Objekte (18, 19) und/oder Schaltflächen zur Visualisierung von Informationen mehrerer Fahrzeugeinrichtungen (9, 10-1, 10-2, 10-3) in einem zweiten Anzeigemodus erzeugbar sind,
**dadurch gekennzeichnet, dass**
mittels der Steuervorrichtung (3) bei einem Übergang von dem ersten Anzeigemodus, welcher eine Anzeige zur Anwendung der Fahrzeugeinrichtung bereitstellt, in den zweiten Anzeigemodus, welcher eine Ausgangsanzeige bereitstellt, Grafikdaten erzeugbar sind, bei welchen die Darstellung der grafischen Objekte (13, 14) und/oder Schaltflächen (16, 17, 20) zur Visualisierung von Informationen der ersten Fahrzeugeinrichtung (9) verkleinert und verändert wird und währenddessen am Rand der Anzeigefläche (2) grafische Objekte (19) und/oder Schaltflächen zur Visualisierung von Informationen anderer Fahrzeugeinrichtungen (10-1, 10-2, 10-3) neu angezeigt werden und diese grafischen Objekte (19) und/oder Schaltflächen zur Visualisierung von Informationen anderer Fahrzeugeinrichtungen (10-1, 10-2, 10-3) vom Rand der Anzeigefläche (2) in Richtung der Mitte der Anzeigefläche (2) bewegt werden.

9. Fahrzeug (11) mit einer Anzeigeeinrichtung (6) nach Anspruch 8.

## Claims

1. A method for displaying information in particular in a vehicle (11), in which graphics data can be generated by a control device (3), which graphics data can control a display surface (2) such that in a first display mode graphic objects (13, 14) and/or buttons (16, 17, 20) for visualizing information of a first vehicle device (9) are displayed and in a second display mode graphic objects (18, 19) and/or buttons for visualizing information of a plurality of vehicle devices (9, 10-1, 10-2, 10-3) are displayed,
**characterized in that**
in a transition from the first display mode, which provides a display for the application of the vehicle device, into the second display mode, which provides an initial display, the representation of the graphic objects (13, 14) and/or buttons (16, 17, 20) for visualizing information of the first vehicle device is decreased in size and changed and, during the same, on the edge of the display surface (2) graphic objects (19) and/or buttons for visualizing information of other vehicle devices (10-1, 10-2, 10-3) are re-displayed and said graphic objects (19) and/or buttons for visualizing information of other vehicle devices (10-1, 10-2, 10-3) are moved from the edge of the display surface (2) in the direction of the center of the display surface (2).

2. A method according to Claim 1,
**characterized in that**
in the transition from the first display mode into the second display mode the representation of the graphic objects (13, 14) and/or buttons (16, 17, 20) for visualizing information of the first vehicle device (9) is changed so that in the second display mode no buttons are displayed any longer.

3. A method according to Claim 1 or 2,
**characterized in that**
in the transition from the first display mode into the second display mode the representation of the graphic objects (13, 14) and/or buttons (16, 17, 20) for visualizing information of the first vehicle device (9) are changed so that at least one partial quantity of the buttons (20) displayed in the first display mode is displayed in the second display mode as display surfaces.

4. A method according to any one of the preceding claims,
**characterized in that**
in the transition from the first display mode into the second display mode the representation of the graphic objects (13, 14) and/or buttons (16, 17, 20) for visualizing information of the first vehicle device (9) is decreased in size so that the aspect ratio remains the same and/or that the relative positioning of the graphic objects and/or buttons displayed in the second display mode, which were also displayed in the first display mode, remains the same.

5. A method according to any one of the preceding claims,
**characterized in that**
in the second display mode in each case a single graphic object (19) is displayed for in each case one further vehicle device (10-1, 10-2, 10-3).

6. A method according to any one of the preceding claims,
**characterized in that**
in the transition from the first display mode into the second display mode the graphic object (19) and/or the button for a further vehicle device (10-1, 10-2, 10-3) in each case is moved radially from the edge of the display surface (2) in the direction of a defined position, in particular the center point, of the display surface (2).

7. A method according to any one of the preceding claims,
**characterized in that**
in the transition from the first display mode into the second display mode the graphic objects (19) and/or buttons for visualizing the information of other vehicle devices (10-1, 10-2, 10-3) are displayed.

8. A display device (6) for a vehicle (11) having a control device (3) by means of which graphics data for the display of graphic objects (13, 14) and/or buttons (16, 17, 20) on a display surface (2) can be generated for visualizing information of a first vehicle device (9) in a first display mode and graphic objects (18, 19) and/or buttons for visualizing information of a plurality of vehicle devices (9, 10-1, 10-2, 10-3) in a second display mode,
**characterized in that**
by means of the control device (3) in a transition from the first display mode, which provides a display for the application of the vehicle device, into the second display mode, which provides an initial display, in which the representation of the graphic objects (13, 14) and/or buttons (16, 17, 20) for visualizing information of the first vehicle device (9) is decreased in size and changed and, during the same, on the edge of the display surface (2) graphic objects (19) and/or buttons for visualizing information of other vehicle devices (10-1, 10-2, 10-3) are re-displayed and said graphic objects (19) and/or buttons for visualizing information of other vehicle devices (10-1, 10-2, 10-3) are moved from the edge of the display surface (2) in the direction of the center of the display surface (2).

9. A vehicle (11) with a display device (6) according to Claim 8.

## Revendications

1. Procédé d'affichage d'informations, plus particulièrement dans un véhicule (11), dans lequel un dispositif de commande (3) peut générer des données graphiques qui contrôlent une surface d'affichage (2) de façon à ce que, dans un premier mode d'affichage, des objets graphiques (13, 14) et/ou des boutons (16, 17, 20) pour la visualisation d'informations d'un premier dispositif du véhicule (9) soient affichés et de façon à ce que, dans un deuxième mode d'affichage, des objets graphiques (18, 19) et/ou des boutons pour la visualisation d'informations de plusieurs dispositifs du véhicule (9, 10-1, 10-2, 10-3) soient affichés,
**caractérisé en ce que**
lors d'un passage du premier mode d'affichage, qui met à disposition un affichage pour l'utilisation du dispositif du véhicule, au deuxième mode d'affichage, qui met à disposition un affichage initial, la représentation des objets graphiques (13, 14) et/ou des boutons (16, 17, 20) pour la visualisation d'informations du premier dispositif du véhicule (9) est réduite et modifiée et, pendant ce temps, au bord de la surface d'affichage (2), les objets graphiques (19) et/ou les boutons pour la visualisation d'informations d'autres dispositifs du véhicule (10-1, 10-2, 10-3) sont affichés et ces objets graphiques (19) et/ou boutons pour la visualisation d'informations d'autres dispositifs du véhicule (10-1, 10-2, 10-3) sont déplacés du bord de la surface d'affichage (2) vers le centre de la surface d'affichage (2).

2. Procédé selon la revendication 1,
**caractérisé en ce que**
lors du passage du premier mode d'affichage au deuxième mode d'affichage, la représentation des objets graphiques (13, 14) et/ou des boutons (16, 17, 20) pour la visualisation d'informations du premier dispositif du véhicule (9) est modifiée de façon à ce que, dans le deuxième mode d'affichage, aucun bouton ne soit plus affiché.

3. Procédé selon la revendication 1 ou 2,
**caractérisé en ce que**
lors du passage du premier mode d'affichage au deuxième mode d'affichage, la représentation des objets graphiques (13, 14) et/ou des boutons (16, 17, 20) pour la visualisation d'informations du premier dispositif du véhicule (9) est modifiée de façon à ce qu'au moins une partie des boutons affichés dans le premier mode d'affichage (20) soient affichés dans le deuxième mode d'affichage en tant que surfaces d'affichage.

4. Procédé selon l'une des revendications précédentes,
**caractérisé en ce que**
lors du passage du premier mode d'affichage au deuxième mode d'affichage, la représentation des objets graphiques (13, 14) et/ou des boutons (16, 17, 20) pour la visualisation d'informations du premier dispositif du véhicule (9) est réduite de façon à ce que le rapport entre les côtés reste le même et/ou à ce que le positionnement relatif des objets graphiques et/ou boutons affichés dans le deuxième mode d'affichage, qui étaient également affichés dans le premier mode d'affichage, reste le même.

5. Procédé selon l'une des revendications précédentes,
**caractérisé en ce que**
dans le deuxième mode d'affichage, un seul objet graphique (19) est affiché pour chaque dispositif supplémentaire du véhicule (10-1, 10-2, 10-3).

6. Procédé selon l'une des revendications précédentes,
**caractérisé en ce que**
lors du passage du premier mode d'affichage au deuxième mode d'affichage, l'objet graphique (19) et/ou le bouton pour un autre dispositif du véhicule (10-1, 10-2, 10-3) est déplacé radialement du bord de la surface d'affichage (2) vers une position définie, plus particulièrement le centre, de la surface d'affichage (2).

7. Procédé selon l'une des revendications précédentes,
**caractérisé en ce que**
lors du passage du premier mode d'affichage au deuxième mode d'affichage, les objets graphiques (19) et/ou les boutons pour la visualisation des informations d'autres dispositifs du véhicule (10-1, 10-2, 10-3) sont affichés.

8. Dispositif d'affichage (6) pour un véhicule (11) avec
un dispositif de commande (3) au moyen duquel des données graphiques pour la visualisation d'objets graphiques (13, 14) et/ou de boutons (16, 17, 20) peuvent être générées sur une surface d'affichage (2) pour la visualisation d'informations d'un premier dispositif du véhicule (9) dans un premier mode d'affichage et des objets graphiques (18, 19) et/ou des boutons pour la visualisation d'informations de plusieurs dispositifs du véhicule (9, 10-1, 10-2, 10-3) dans un deuxième mode d'affichage,
**caractérisé en ce que**
au moyen du dispositif de commande (3), lors d'un passage du premier mode d'affichage, qui met à disposition un affichage pour l'utilisation du dispositif du véhicule, au deuxième mode d'affichage, qui met à disposition un affichage initial, des données graphiques peuvent être générées, pour lesquelles la représentation des objets graphiques (13, 14) et/ou des boutons (16, 17, 20) pour la visualisation d'informations du premier dispositif du véhicule (9) est réduite et modifiée et, pendant ce temps, au bord de la surface d'affichage (2), les objets graphiques (19) et/ou les boutons pour la visualisation d'informations d'autres dispositifs du véhicule (10-1, 10-2, 10-3) sont affichés et ces objets graphiques (19) et/ou boutons pour la visualisation d'informations d'autres dispositifs du véhicule (10-1, 10-2, 10-3) sont déplacés du bord de la surface d'affichage (2) vers le centre de la surface d'affichage (2).

9. Véhicule (11) avec un dispositif d'affichage (6) selon la revendication 8.
